# EUROPEAN PATENT APPLICATION

(11) **EP 2 390 769 A2**
(43) Date of publication of application: **30.11.2011**
(21) Application number: 11167530.2
(22) Date of filing: 25.05.2011
(51) Int. Cl.: G06F 3/041

(54) **Operation method for touch panel of portable terminal and portable terminal supporting the same**

(30) Priority: 25.05.2010 KR 20100048573
(71) Applicant: Samsung Electronics Co., Ltd., Gyeonggi-do (KR)
(72) Inventor: Jung, Gong Hwan, Gyeonggi-do (KR)
(74) Representative: Harrison Goddard Foote

(57) **Abstract**

An operation method for a touch panel of a portable terminal and a portable terminal supporting the same are provided. The operation method for a touch panel of a portable terminal includes activating the touch panel, collecting touch-down events from the activated touch panel, acquiring a vertical synchronous signal for driving a display unit, and performing a polling of the touch panel in unit of predefined time-periods based on the vertical synchronous signal.

## Description

### BACKGROUND OF THE INVENTION

### 1. Field of the Invention:

The present invention relates to a portable terminal. More particularly, the present invention relates to an operation method for a touch panel capable of removing screen flickering occurring upon the occurrence of a touch and a portable terminal supporting the same.

### 2. Description of the Related Art:

A portable terminal supports a call function while in motion and has been used in numerous fields due to its convenience and ease of portability. The portable terminal provides various input methods to provide user functions. For example, as a portable terminal of the related art provides a touch screen including a touch panel and a display unit, a user may process an operation on the touch panel to select a specific image output on the display unit. Furthermore, the portable terminal creates a touch event due to a corresponding user operation and controls an application program corresponding to a user function based on the created touch event.

The portable terminal of the related art simultaneously drives a touch panel and a display unit, performs a specific operation according to a generation location and a type of a touch event occurring on the touch panel, and outputs an image application according thereto on the display unit. However, when a touch event occurs on the touch panel, an operation of a terminal for collecting the touch event has an influence upon an image output operation of the display unit. As a result, in the portable terminal of the related art, while a user creates a touch event on the touch panel, image output on the display unit is flickered or spread out.

Therefore, a need exists for an operation method for a touch panel capable of preventing image flickering by correctly processing images of a display unit according to an operation of a touch panel, and a portable terminal supporting the same.

### SUMMARY OF THE INVENTION

Aspects of the present invention are to address at least the above-mentioned problems and/or disadvantages and to provide at least the advantages described below. Accordingly, an aspect of the present invention is to provide an operation method for a touch panel capable of preventing image flickering by correctly processing images of a display unit according to an operation of a touch panel, and a portable terminal supporting the same.

In accordance with an aspect of the present invention, an operation method for a touch panel of a portable terminal is provided. The operation method includes activating the touch panel, collecting touch-down events from the activated touch panel, acquiring a vertical synchronous signal for driving a display unit, and performing a polling of the touch panel in unit of predefined time-periods based on the vertical synchronous signal.

In accordance with another aspect of the present invention, a portable terminal with a touch panel is provided. The portable terminal includes a display unit for outputting a screen configuring element supporting a function according to activation of the function, a touch panel disposed at an upper portion of the display unit for generating a touch event according to touch input of a user, and a control unit for controlling execution of a polling of the touch panel based on a vertical synchronous signal supported on the display unit when a touch-down event occurs on the touch panel.

An operation method for a touch panel and a portable terminal supporting the same, according to an exemplary embodiment of the present invention, may synchronize an image output driving timing of a display unit with a driving timing of a touch panel to remove an image error on the display unit.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 is a block diagram illustrating a configuration of a portable terminal according to an exemplary embodiment of the present invention;

FIG. 2 is a block diagram illustrating a control unit of a portable terminal according to an exemplary embodiment of the present invention; and

FIG. 3 is a flowchart illustrating an operation method for a touch panel according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

Hereinafter, a touch event is an event generated according to a user touching a touch panel. The touch event has coordinates value of a touched point, a form of the touch, for example, a value discriminating a touch-down, a touch cancellation, or a drag.

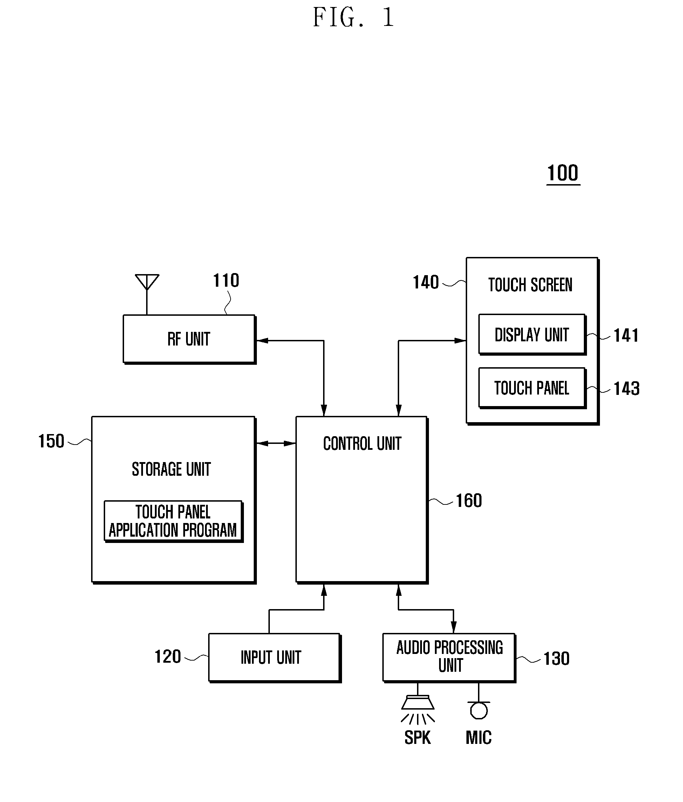

FIGs. 1 through 3, discussed below, and the various exemplary embodiments used to describe the principles of the present disclosure in this patent document are by way of illustration only and should not be construed in any way that would limit the scope of the disclosure. Those skilled in the art will understand that the principles of the present disclosure may be implemented in any suitably arranged communications system. The terms used to describe various embodiments are exemplary. It should be understood that these are provided to merely aid the understanding of the description, and that their use and definitions in no way limit the scope of the invention. Terms first, second, and the like are used to differentiate between objects having the same terminology and are in no way intended to represent a chronological order, unless where explicitly state otherwise. A set is defined as a non-empty set including at least one element.

FIG. 1 is a block diagram illustrating a configuration of a portable terminal according to an exemplary embodiment of the present invention.

Referring to FIG. 1, a portable terminal 100 includes a Radio Frequency (RF) unit 110, an input unit 120, an audio processing unit 130, a touch screen 140, a storage unit 150, and a control unit 160.

The portable terminal 100 having a construction as described above controls driving of a touch panel 143 based on a signal necessary for driving a display unit 141, for example, a synchronous signal generated by a Vertical_SYNChronization (V_SYNC) interrupt handler function. Accordingly, the portable terminal 100 may use a synchronous signal necessary to output an image of the display unit 141 with a polling period of a touch event occurring on the touch panel 143 to remove a synchronization unbalance with the display unit 141 occurring due to driving the touch panel 143. Accordingly, the portable terminal 100 may prevent the occurrence of an image output error of the display unit 141 while collecting touch events on the touch panel 143.

The RF unit 110 forms a first communication channel for a voice call, a second communication channel for a video call, and a third communication channel for transmitting data, such as images or messages under the control of the control unit 160. That is, the RF unit 110 forms a voice call channel, a data communication channel, and a video call channel between mobile communication systems. To this end, the RF unit 110 may include an RF transmitter for up-converting a frequency of a transmitted signal and for amplifying the signal, and an RF receiver for low-noise-amplifying a received signal and for down-converting the signal.

A user function based on the RF unit 110 may be selected and activated according to a touch event occurring on the touch panel 143 or may be selected and activated according to an input signal from the input unit 120. For example, in a state that a specific phone number included in a phone book is output on the display unit 141, when a user touches-down a touch panel 143 corresponding to an output area of the corresponding phone number for a set time, the RF unit may be activated to form a communication channel based on the corresponding phone number. When the portable terminal 100 has a communication service function, the RF unit 110 may be included. If the portable terminal 100 does not support a separate communication service function, the RF unit may be excluded.

The input unit 140 may receive input of numerals or text information and includes a plurality of input keys and functions keys for setting all types of functions. The function keys may include arrow keys, side keys, and hot keys set to execute specific functions. Furthermore, the input unit 120 generates a key signal associated with user setting and function control of a portable terminal 100 and provides the generated key signal to the control unit 160. The input unit may be implemented by a QWERTY key pad, a 3*4 key pad, or a 4*3 key pad. Furthermore, the input unit 120 may be implemented by a QWERTY key map, a 3*4 key map, a 4*3 key map, or a control key map. When a touch screen 140 of the portable terminal 100 is supported in a full touch screen form, the input unit 120 may include only a side key provided at a side of a case of the portable terminal 100.

The audio processing unit 130 includes a speaker (SPK) for playing transmitted and received audio data at a call time, audio data included in a received message, and audio data according to playback of audio files stored in the storage unit 150; and a microphone (MIC) for collecting user's voices or other audio signals at the call time. When a touch operation occurs on a touch panel 143 of the portable terminal 100 to create a corresponding specific touch event, the audio processing unit 130 may output an effect sound according to the touch event. An output of the effect sound according to the touch event may be removed according to a user setting.

The touch screen includes the display unit 141 and the touch panel 143. The touch screen 140 may have a structure in which the touch panel 143 is disposed at a front surface of the display unit 141. The size of the touch screen 140 may be determined depending on the size of the touch panel 143.

The display unit 141 displays all types of menus of the portable device 100, information input by a user, or information provided to the user. That is, the display unit 141 may provide various screens according to use of the portable terminal 100, for example, an idle screen, a menu screen, a message creation screen, and a call screen. The display unit 141 can be configured by a flat panel display, such as a Liquid Crystal Display (LCD) or an Organic Light Emitted Diode (OLED). Furthermore, the display unit 141 may be provided at an upper portion or a lower portion of the touch panel 143. The display unit 141 can be driven under the control of the control unit 160. There is a need for various signals to drive the display unit 141. For example, there is a demand for a signal generated by a gate driver and a signal generated by a data driver to drive the display unit 141. Moreover, when the display unit 141 is configured by an LCD, there is a need for a common voltage signal necessary for a common electrode of the LCD. More particularly, the display unit 141 needs a vertical synchronous signal for various synchronizing operations. The portable terminal 100 may provide a V_SYNC interrupt handler function for supporting a vertical synchronous signal necessary for the display unit 141, and support a vertical synchronous signal necessary for the display unit 141 based thereon.

The touch panel 143 may be disposed in at least one of an upper portion or a lower portion of the display unit 141. The touch panel 143 may generate a touch event according to a contact or an approach of an object to within a certain distance of the touch panel 143 and transfer the generated touch event to the control unit 160. In this case, a sensor constituting the touch panel is arranged in a matrix pattern. Corresponding location information on the touch panel 143 and information regarding a type of a touch event are transferred to the control unit 160 according to a touch event occurring on the touch panel 143.

The control unit 160 determines location information and a type of a touch event transferred from the touch panel 143. The control unit 160 may determine specific information of the display unit 141 mapped to a corresponding location and then activate a user function linked to the corresponding specific information. More particularly, when a touch-down event occurs, the touch panel 143 may repeatedly scan the touch panel 143 with a constant period to detect whether the touch-down event continuously maintains or moves. The touch event detection may be operated according to a "polling" type. In this case, a polling period applied to the touch panel 143 is synchronized with a signal period generated from a V_SYNC interrupt handler function for supporting a vertical synchronous signal of the display unit 141. Namely, when a touch-down event occurs on the touch panel 143, the V_SYNC interrupt handler function is called for driving the touch panel 143, and a polling operation is performed based on the called V_SYNC interrupt handler function. Here, the polling may become a procedure for updating touch-down event information created from the touch panel 143 in units of predefined periods.

The storage unit 150 may store information regarding a key map, a menu map, or a touch lock part cancellation area for an operation of the touch screen 140 as well as an application program necessary for a function operation according to an exemplary embodiment of the present invention. Here, the key map or the menu map may be presented in various forms. That is, the key map may include a keyboard map, a 3*4 key map, a QWERTY key map, or a control key map for controlling an operation of a currently activated application program. The menu map may control an operation of the currently activated application program. The storage unit 150 may include a program area and a data area.

The program area may store an Operating System (OS) for booting the portable terminal 100 and for operations of respective constructions, and application programs for playing various files, such as an application program for supporting a call function of the portable terminal 100, a web browser for accessing an Internet server, a Motion Pictures Expert Group (MPEG)-1 or (MPEG-2) Audio Layer-3 (MP3) application program for playing other sound sources, an image output application program for playing photographs, and a moving image playing application program. More particularly, the program area may store a display unit operation program and a touch panel operation program.

The display unit operation program includes a first routine for supplying power to the display unit 141, a second routine for transferring data to the display unit 141, and a third routine for providing a vertical synchronous signal necessary for the display unit 141. The second routine may output various icons, images, or texts for configuring screens used for a currently activated user function.

The touch panel operation program is loaded in the control unit 160 when the touch panel 143 is activated according to schedule information, and supports an operation of the touch panel 143. The touch panel operation program may include a first routine for controlling power supply of the touch panel 143, a second routine for calling a function providing a vertical synchronous signal when a touch-down event occurs on the touch panel 143, a third routine for executing polling according to a signal period of the vertical synchronous signal, a fourth routine for processing touch events collected according to execution of the polling, and for cancelling calling of a function providing the vertical synchronous signal according to the occurrence of a touch cancellation event. The touch panel operation program may further include a fifth routine for setting touch lock according to external input or a set schedule of the touch panel 143 and a sixth routine for cancelling touch lock according to a specific input signal. The touch panel operation program may include a seventh routine for setting an area of the touch panel 143. The seventh routine may be divided into a touch valid area corresponding to an image or an icon output on the display unit 141 and an invalid area.

The data area stores data created according to use of the portable terminal 100, and may store phone book data, at least one icon according to a widget function, and various contents. Furthermore, the data area may store user input achieved by the touch panel 143. More particularly, the data area may store various information created on the touch panel 143. That is, the data area temporarily stores a type and a location of a touch event occurring on the touch panel. The data area may temporarily store touch events repeatedly collected according to a polling period and then transfer them to the control unit 160.

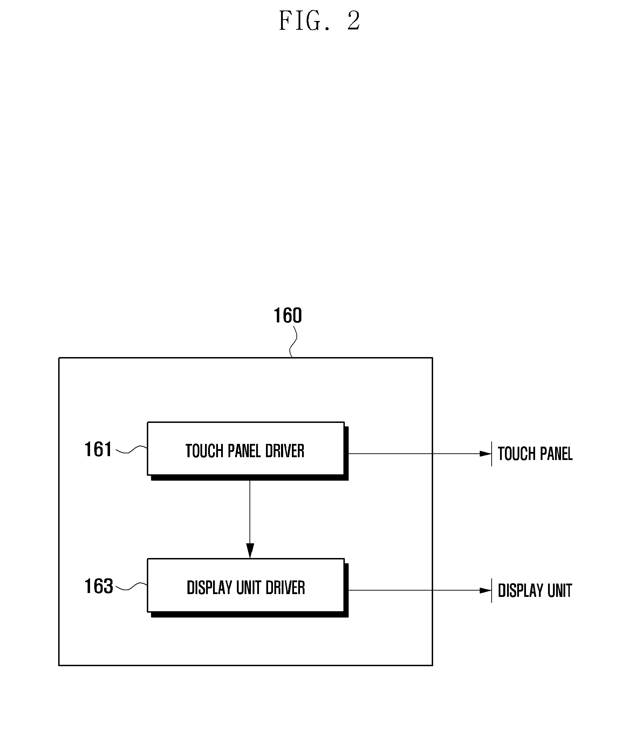

The control unit 160 controls power supply to respective constructions of the portable terminal 100 to execute an initialization procedure. Furthermore, the control unit 160 may synchronize a polling period of the touch panel 143 of the portable terminal 100 with a vertical synchronous signal of the display unit 141 to collect touch events, thereby removing an influence of a display unit 141 due to signal processing necessary for driving the touch panel 143. To this end, the control unit may include a configuration as shown in FIG. 2.

FIG. 2 is a block diagram illustrating a control unit of a portable terminal according to an exemplary embodiment of the present invention.

Referring to FIG. 2, a control unit 160 may include a touch panel driver 161 and a display unit driver 163.

After power stored in the storage unit 150 in a routine form is supplied to the display unit driver 163, it is loaded under the control of the control unit 160 to perform fixing for controlling the display unit 141. The display unit driver 163 may construct a screen for a currently activated user function, and change a screen configuration according to various input signals input from the input unit 120 or the touch panel 143. For example, when a function for searching a menu is activated, the display unit driver 163 may output a menu with various menu items to the display unit 141. In this case, the display unit driver 163 reads an icon image corresponding to each menu item from the storage unit 150 and outputs the read icon image to the display unit 141.

Moreover, when a touch event occurs on the touch panel 143, the display unit driver 163 may control the display unit 141 to output an image effect according to the occurrence of the touch event. In addition, when the touch event is an input signal for activating a specific user function, the display unit driver 163 may control the display unit 141 to output a screen corresponding to a user function selected after activation of the corresponding user function under the control of the control unit 160. Substantially, the display unit driver 163 provides data corresponding to information to a data driver configuring the display unit 141 to output the foregoing images, icons, and texts on the display unit 141. The display unit driver 163 may drive a gate driver outputting a specific pixel associated with data output from a data driver to a display panel.

Furthermore, the display unit driver 163 may transmit signals to construct images on a display panel and provide the signals to the display panel according to characteristics or the type of the display unit 141, namely, device characteristics constructing the display unit 141, for example, LCD or OLED. The display unit driver 163 may call functions for generating the foregoing various signals, in particular, a V_SYNC interrupt handler function for generating a vertical synchronous signal to generate the vertical synchronous signal. The display unit driver 163 may control execution of various operations necessary for driving the display panel based on the vertical synchronous signal.

The touch panel driver 161 controls power supply of the touch panel 143 under the control of the control unit 160, and drives a touch panel 143 in a turned-on state. When power is supplied to the touch panel 143, the touch panel driver 161 may divide an entire area of the touch panel 143 into a valid area and an invalid area. To this end, the touch panel driver 161 may determine which area of the touch panel 143 is set as the valid area by referring various icon information output on the display unit 141. Meanwhile, the touch panel driver 161 may set an entire area of the touch panel 143 as the valid area. When the touch-down event occurs on the touch panel 143, the touch panel driver 161 may generate an interrupt according to the occurrence of the touch-down event and control assignment of a Task corresponding to the touch-down event.

Furthermore, the touch panel driver 161 may register a V_SYNC interrupt handler function in an assigned Task, and apply a vertical synchronous signal generated from the V_SYNC interrupt handler function with a polling period. That is, the touch panel driver 161 may repeatedly scan the touch panel 143 based on the vertical synchronous signal generated from the V_SYNC interrupt handler function while a touch-down event maintains, and acquire location information of the touch down event. In addition, the touch panel driver 161 may acquire a moving direction, a moving speed, and a moving distance of the touch-down event in a scanning procedure of the touch panel 143, and generate a touch event based thereon. Accordingly, the control unit 160 may execute a user function according to a type of the generated touch event and control a screen change on the display unit 141 according thereto.

Meanwhile, the touch panel driver 161 may determine whether the touch down event occurring on the touch panel 143 is cancelled, namely a touch cancellation event occurs in a procedure scanning in units of poling periods. When the touch cancellation event occurs, the touch panel driver 161 may control restoration of the assigned Task. That is, the touch panel driver 161 may control call cancellation of the V_SYNC interrupt handler function. When power is supplied and a touch down event occurs in a state except for a specific state, for example, a touch lock state, the touch panel driver 161 may control call of the V_SYNC interrupt handler function and a touch event process according to a polling period as mentioned above.

As illustrated earlier, the portable terminal 100 with the touch panel 143, according to an exemplary embodiment of the present invention, may synchronize a vertical synchronous signal with a polling period referred to periodically collected touch events at the time of driving the touch panel 141 to prevent image flickering of a display unit 141 due to a collection period of the touch events occurring in a procedure collecting the touch events. When a separate timer determines a polling period and touch events are collected according to a corresponding polling period in a procedure driving the touch panel 143, the polling period determined by the timer may not be synchronized with a vertical synchronous signal of the display unit 141. In this case, while a touch down event occurs on the touch panel 143, an operation collecting touch events based on the timer is not synchronized with the vertical synchronous signal of the display unit 141, thereby resulting in the occurrence of image flickering. As previously illustrated, the portable terminal 100 may periodically collect touch events based on the vertical synchronous signal of the display unit 141 to solve the foregoing problem.

The foregoing embodiment explained that image flickering on a display unit is removed through a configuration of the portable terminal 100 and functions thereof. An operation method for a touch panel for removing image flickering on a display unit by the foregoing portable terminal 100 will now be described with reference to the accompanying drawings.

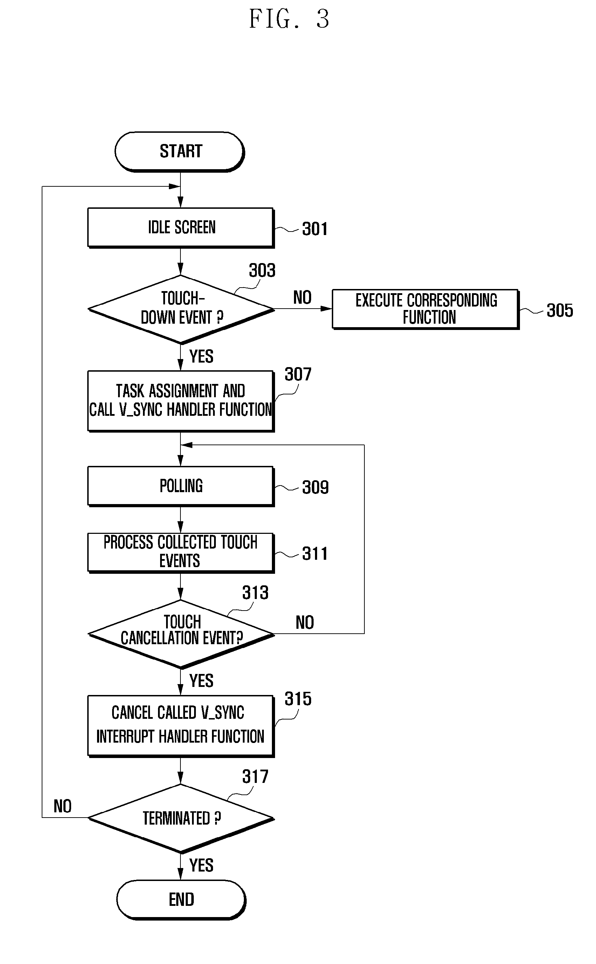

FIG. 3 is a flowchart illustrating an operation method for a touch panel according to an exemplary embodiment of the present invention.

Referring to FIG. 3, in an operation method for a touch panel, when power is supplied to the portable terminal 100, a control unit 160 of the portable terminal 100 may initialize respective constructions thereof using the supplied power and control output of an idle screen according to set schedule information in step 301. Here, the control unit 160 may control automatic activation of a specific user function according to the set schedule information and control activation of the touch panel 143 while outputting a necessary screen on the display unit 141 according to activation of a corresponding user function. While the idle screen is being output in step 301, the control unit 160 may initialize the touch panel 143 and set the initialized touch panel 143 conforming to a current screen output on the display unit 141. For example, when an icon indicating a certain menu is output on the idle screen, the control unit 160 may set a touch panel 143 area corresponding to an output area of the icon as a valid area.

In step 303, the control unit 160 determines whether a touch-down event occurs on the touch panel 143. When a user touches on a specific point of the touch panel 143 using various means, such as a stylus pen or a hand, the touch-down event may occur. In this case, the control unit 160 determines whether an occurrence area of the touch-down event is a valid area. When the occurrence area of the touch down event is the valid area, the control unit 160 may determine that a corresponding touch-down event is valid. To this end, when the touch down event occurs, a storage unit 150 may temporarily store the touch-down event occurred. If it is determined in step 303 that the touch-down event does not occur, the control unit 160 may execute a corresponding function of the portable terminal 100 in step 305. Here, the corresponding function is a function supported from the portable terminal 100, which may include a file searching function, a file playing function, a camera function, and a broadcasting watching function. An input signal for executing a corresponding function may be generated from the input unit 120.

In contrast, if it is determined in step 303 that the touch-down event occurs, the control unit 160 may perform Task assignment and call of a V_SYNC handler function in step 307. The Task assignment may be a thread assigned to process a touch event according to the occurrence of a touch-down event. The V_SYNC interrupt handler function may generate a vertical synchronous signal of the display unit 141. The foregoing embodiment has been described that a procedure generating the vertical synchronous signal is a Task assignment and V_SYNC interrupt handler function call. However, exemplary embodiments of the present invention are not limited thereto. That is, a procedure performed in step 307 by the control unit 160 is a procedure capable of acquiring information regarding the vertical synchronous signal of the display unit 141 by the control unit 160. The forgoing procedure may be a procedure calling a function generating the vertical synchronous signal of the display unit 141 or referring the vertical synchronous signal of the display unit 141.

In step 309, the control unit 160 may perform a "Polling" procedure based on the vertical synchronous signal. Here, the "Polling" procedure may be a procedure for collecting information of a touch-down event on the touch panel 143, namely, a procedure for updating touch-down event information by the V_SYNC interrupt handler function for every vertical synchronous signal generation time generated in units of time-periods. When touch events are collected through a "Polling" procedure in step 309, the control unit 160 may process the collected touch events in step 311. Here, the procedure for processing the collected touch events may include a control procedure of a display unit 141 and a procedure for executing a user function according to the collected touch events. For example, when a location of the touch-down event changes, the control unit 160 may apply an image change effect according to the changed touch event to the display unit 141. In addition, the control unit 160 may recognize change in the location of the touch-down event as the occurrence of a drag event, and control movement of a selected icon output on the display unit or activation of a certain menu according thereto.

Subsequently, the control unit 160 determines whether a touch cancellation event occurs in step 313. If it is determined in step 313 that the touch cancellation event does not occur, the control unit 160 may return to step 309 and repeat the foregoing procedures.

In contrast, if it is determined in step 313 that the touch cancellation event occurs, the control unit 160 may cancel a currently called V_SYNC interrupt handler function in step 315. That is, the control unit 160 may stop the procedure of acquiring a vertical synchronous signal in step 315.

In step 317, the control unit 160 determines whether an input signal for terminating the portable terminal 100 occurs. If it is determined in step 317 that the input signal for terminating the portable terminal 100 does not occur, the control unit 160 may return to step 301 and repeat the foregoing procedures. The control unit 160 may perform an output of the display unit 141 to which touch events collected after step 315 are applied and return to step 303 to repeat following procedures. In contrast, if it is determined in step 317 that the touch cancellation event occurs on the touch panel 143, the control unit 160 may control stop of a polling operation according to a vertical synchronous signal of the display unit 141.

As it is clear from the forgoing description, an operation method for a touch panel, according to an exemplary embodiment of the present invention, may acquire a vertical synchronous signal of a display unit when a touch-down event occurs at an operation of the touch panel, and perform a polling procedure based on the acquired vertical synchronous signal. Accordingly, in the operation method for a touch panel, since a procedure collecting touch events of the touch panel is synchronized with application of the vertical synchronous signal of the display unit, image flickering of the display unit 141 due to an operation of the touch panel may be prevented.

While the invention has been shown and described with reference to certain exemplary embodiments thereof, it will be understood by those skilled in the art that various changes in form and details may be made therein without departing from the spirit and scope of the invention as defined in the appended claims and their equivalents.

## Claims

1. An operation method for a touch panel of a portable terminal, the method comprising:
activating the touch panel;
collecting touch-down events from the activated touch panel;
acquiring a vertical synchronous signal for driving a display unit; and
performing a polling of the touch panel in unit of predefined time-periods based on the vertical synchronous signal.

2. The method of claim 1, wherein the acquiring of the vertical synchronous signal comprises:
calling a Vertical_SYNChronization (V_SYNC) interrupt handler function for generating the vertical synchronous signal; and
collecting the vertical synchronous signal generated from the V_SYNC interrupt handler function.

3. The method of claim 2, wherein the performing of the polling of the touch panel comprises:
collecting information of the touch-down events on the touch panel; and
updating the touch-down events information using the V_SYNC interrupt handler function for every vertical synchronous signal generation time generated in units of time-periods.

4. The method of claim 1, further comprising:
testing an occurrence of a touch cancellation event; and
stopping the acquiring of the vertical synchronous when the touch cancellation event occurs.

5. The method of claim 4, further comprising stopping the polling of the touch panel when the touch cancellation event occurs.

6. The method of claim 1, further comprising assigning a task for the polling according to the vertical synchronous signal after the touch-down events occur.

7. A portable terminal with a touch panel, the terminal comprising:
a display unit for outputting a screen configuring element supporting a function according to activation of the function;
a touch panel disposed at an upper portion of the display unit for generating a touch event according to touch input of a user; and
a control unit for controlling execution of a polling of the touch panel based on a vertical synchronous signal supported on the display unit when a touch-down event occurs on the touch panel.

8. The terminal of claim 7, wherein the polling includes collecting information of the touch-down event on the touch panel and updating the touch-down event information using a Vertical_SYNChronization (V_SYNC) interrupt hander function for every vertical synchronous signal generation time generated in units of time-periods.

9. The terminal of claim 7, wherein the control unit tests whether a touch cancellation event cancelling a touch-down event generated on the touch panel occurs, and stops acquisition of the vertical synchronous signal when the touch cancellation event occurs.

10. The terminal of claim 7, wherein the control unit stops the polling of the touch panel when the touch cancellation event occurs.

11. The terminal of claim 7, wherein the control unit calls a V_SYNC interrupt hander function to acquire the vertical synchronous signal.

12. The terminal of claim 11, wherein the control unit cancels the V_SYNC interrupt hander function called to acquire the vertical synchronous signal when the touch cancellation event occurs.

13. The terminal of claim 7, wherein the control unit controls task assignment for the polling of the touch panel according to the vertical synchronous signal after the touch-down event occurs.
